# EUROPEAN PATENT APPLICATION

(11) **EP 0 930 221 A2**
(43) Date of publication of application: **21.07.1999**
(21) Application number: 99100503.4
(22) Date of filing: 12.01.1999
(51) Int. Cl.: B62D 25/20, B62D 29/00, B62D 23/00

(54) **Vehicle space frame structure**

(30) Priority: 14.01.1998 NO 980165; 13.03.1998 NO 981119
(71) Applicant: NORSK HYDRO ASA, 0240 Oslo (NO)
(72) Inventor: Marcussen, Povl Erik, 6270 Tonder (DK)
(74) Representative: Patentanwälte Leinweber & Zimmermann

(57) **Abstract**

Vehicle space frame (1) structure comprising an integrated (sandwich) floor member (2) as a structural member increasing both the static and dynamic stiffness of the whole space frame structure, where the sandwich floor comprises a light metal foam core bonded to cover sheet members.

## Description

The present invention relates to a vehicle space frame structure, and more particularly to a sandwich floor member being a structural member of the frame structure.

A vehicle floor in a modern space frame structure being a self-supporting unit apart from complying with the requests to an adequate torsion and bending resistance and reduction of the noise level in the vehicle coupé, should also contribute to the total stiffness of the vehicle frame structure.

None of the presently known and customarily applied materials/solutions seems to satisfy the above requests for the floor in a cost effective, low weight and simple construction way.

Thus, e.g. presently widely applied floors consisting of stamped and formed sheets of steel or aluminium do not add sufficient stiffness to the structure and normally require additional noise damping material.

The recently introduced sandwich type of floors having a core of polymeric material or honeycomb materials, besides being expensive, have the same disadvantages with regard to the structural stiffness unless reinforced by integrated metal cover sheets.

Furthermore, none of the above floor constructions/applied materials meet the recently raised demand for increased energy absorption, e.g. in connection with side impact in the case of a vehicle collision.

Consequently, it is an object of the present invention to provide a vehicle space frame structure avoiding the above short-comings of the known constructions and resulting in increased bending stiffness and torsion resistance of the vehicle body structure as well as a high (specific) energy absorption.

Another object of the invention is to provide a vehicle space frame structure and particularly a floor member having improved noise damping and thus providing an increased comfort for the occupants of the vehicle.

According to the invention, the above objects are achieved by a vehicle space frame structure comprising as a structural member a light metal foam member bonded to at least one cover sheet member.

Preferably, said structural member is adapted to increase both the static and dynamic stiffnesses of the whole space frame structure and/or is adapted to increase the energy absorption of the whole space frame structure.

According to a further preferred embodiment, said structural member is an integrated sandwich floor member comprising said foam member as a core and cover sheet members on both sides thereof.

Said foam member preferably comprises an aluminium foam and/or an aluminium alloy foam, such as Si₁₂Mg₁Ni_{2.5} based metal foam.

According to a further preferred embodiment, said foam member comprises reinforcing particles.

Said reinforcing particles may be made of a non-metallic material, such as ceramic. Preferably, said reinforcing particles comprise SiC and/or Al₂O_{3.}

Said foam member may exhibit a density typically in a range from 0.1 g/cm³ to 0.5 g/cm³, preferably 0.2 g/cm³ to 0.4 g/cm³.

In order to reduce the overall weight, said cover sheet member is preferably made of a light metal, such as aluminium.

Said bonding between said metal foam member and said cover sheet member is preferably done by means of gluing.

The invention will now be described in more details referring to the attached drawings, Figs. 1-3, illustrating preferred embodiments of the floor construction, where
- Fig. 1: is a schematical, partial perspective view of a vehicle space frame structure,
- Fig. 2: is a schematical vertical cross-sectional view of the floor construction, and
- Fig. 3: shows schematically a detail of a possible connection/bonding between the space frame members and the (sandwich) floor member.

Aluminium foam provided by foaming of molten aluminium or aluminium alloys, preferentially reinforced by the presence of small non-metallic (ceramic) particles as disclosed in EP 0 483 184 B1, has already proved to be an excellent, light weight energy absorbing material hitherto applied mainly as a filter in extruded hollow shapes applied for a front/rear impact absorption on vehicles.

Use of such reinforced light metal foam as a core in a sandwich design of a floor member in a vehicle frame structure according to the present invention utilises optimally also other inherent features of the foam material (light weight, stiffness, noise damping) to provide a superior floor construction substantially improving the characteristics/behaviour fo the whole frame construction.

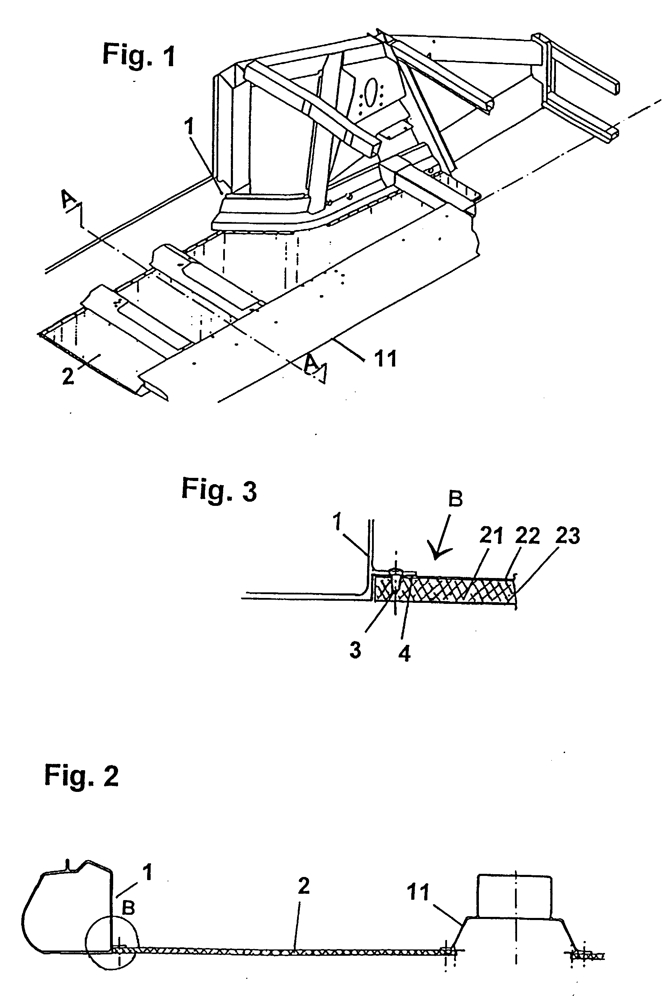

Referring to the drawings, and particularly to Fig. 1 showing schematically in a partial perspective view a vehicle space frame structure as a structural system of interconnected light metal shapes (members), a floor member 2 is integrated into the structure bridging the shown front (rear) side member 1 and a central tunnel member 11.

Fig. 2 illustrates schematically in a partial vertical cross-sectional view taken along lines A-A in Fig. 1 in principle the integration of the floor member 2 into the space frame extending between the side member 1 and the central tunnel member 11.

Details of fastening/connection between the structural space frame members 1, 2, 11 and configuration of the sandwich type floor member 2 according to the present invention are apparent from Fig. 3 showing an enlarged detail B from Fig. 2.

The sandwich floor member 2 comprises a core plate material 21 of light metal foam (e.g. aluminium, magnesium foam) and advantageously/preferentially Al-alloy foam reinforced by non-metallic particles being cast and cut into desirable dimensions. The core plate exhibiting a thickness between 8-10 mm is then sealed on each side by a thin aluminium (alloy) cover sheet, shown in the figure as top and bottom sheet 22, 23, respectively.

Tests conducted on such provided sandwich elements show that the sealing cover sheets stabilise the deformation process under load by lowering the danger of buckling of the elements and yielding increased degree of deformation.

An obvious advantage of applying Al-alloy sheets besides the low weight aspect is to facilitate material recycling.

Preferentially the attachment/bonding between the cover sheets 22, 23 and the core plate 21 will be secured by means of gluing 4. Thanks to the possibility to apply easily any conventional connecting mechanical means on the foam core material, the connection between the core 21 and the cover sheets 22, 23 and/or attachment to side member 1 can be made, i.e. as illustrated by means of a bolt 2, screws etc.

The properties of metal foams applied as core material depend to a great degree upon the characteristics of the pores (closed spheres) distributed through their bodies. These properties, such as shape, size, number, uniformity and surface area, can be controlled under the production foaming process and characterised by the density, which in case of the foam application according to the present invention should be typically in the range of 0.1 g/cm³ - 0.5 g/cm³ and preferentially approximately 0.25 g/cm³.

Application of a sandwich floor member according to the present invention as a structural integrated part of a vehicle body meets the objectives of increasing static and dynamic stiffness of the whole frame structure, thus increasing the energy absorption and safety for the occupants, and finally increasing the overall comfort of the structure, i.e. noise level.

Compared to the hitherto known sandwich floors having a core of polymeric materials the sandwich floor according to the present invention offers further advantages in the case of a vehicle collision resulting in fire: There is no softening/collapse of the core plates at elevated temperatures and no development of (poisonous) fumes hazardous for the vehicle occupants.

## Claims

1. Vehicle space frame structure comprising as a structural member (2) a light metal foam member (21) bonded to at least one cover sheet member (22, 23).

2. The structure of claim 1, wherein said structural member (2) is adapted to increase both the static and dynamic stiffnesses of the whole space frame structure.

3. The structure of claim 1 or 2, wherein said structural member (2) is adapted to increase the energy absorption of the whole space frame structure.

4. The structure of any preceding claim, wherein said structural member (2) is an integrated sandwich floor member comprising said foam member (21) as a core and cover sheet members (22, 23) on both sides thereof.

5. The structure of any preceding claim, wherein said foam member (21) comprises an aluminium foam and/or an aluminium alloy foam, such as Si₁₂Mg₁Ni_{2.5}.

6. The structure of any preceding claim, wherein said foam member (21) comprises reinforcing particles.

7. The structure of claim 6, wherein said reinforcing particles are of a non-metallic material, such as ceramic.

8. The structure of claim 7, wherein said reinforcing particles comprise SiC and/or Al₂O₃.

9. The structure of any preceding claim, wherein said foam member (21) exhibits a density typically in a range from 0.1 g/cm³ to 0.5 g/cm³, preferably 0.2 g/cm³ to 0.4 g/cm³.

10. The structure of any preceding claim, wherein said cover sheet member (22, 23) is made of a light metal, such as aluminium.

11. The structure of any preceding claim, wherein said bonding between said metal foam member (21) and said cover sheet member (22, 23) is done by means of gluing.
